# EUROPÄISCHE PATENTSCHRIFT

(11) **EP 3 404 153 B1**
(45) Veröffentlichungstag und Bekanntmachung des Hinweises auf die Patenterteilung: **20.01.2021**
(21) Anmeldenummer: 18168732.8
(22) Anmeldetag: 23.04.2018
(51) Int. Cl.: E03D 11/14, F16B 37/08, E03C 1/324

(54) **BEFESTIGUNGSSET ZUM BEFESTIGEN EINES MONTAGEGESTELLS FÜR SANITÄROBJEKTE UND VERWENDUNG EINES SOLCHEN BEFESTIGUNGSSETS**
FIXING SET FOR FIXING A MOUNTING FRAME FOR SANITARY OBJECTS AND USE OF SUCH A FIXING SET
ENSEMBLE DE FIXATION DESTINÉ À LA FIXATION D'UN CHASSIS DE MONTAGE POUR OBJETS SANITAIRES ET UTILISATION D'UN TEL ENSEMBLE DE FIXATION

(30) Priorität: 17.05.2017 DE 102017110760
(43) Veröffentlichungstag der Anmeldung: 21.11.2018
(73) Patentinhaber: Viega Technology GmbH & Co. KG, 57439 Attendorn (DE)
(72) Erfinder: Dietermann, Patrick, 57368 Lennestadt (DE); Rothstein, Gerhard, 42553 Velbert (DE)
(74) Vertreter: Cohausz & Florack

(56) Entgegenhaltungen:
- EP-A2- 1 990 547
- EP-A2- 2 752 526
- EP-B1- 1 260 639
- US-A- 5 711 645

## Beschreibung

Die Erfindung betrifft ein Befestigungsset zum Befestigen eines Montagegestells für Sanitärobjekte, insbesondere für einen Spülkasten, eine WC-Schüssel und/oder ein Waschbecken, an einer Gebäudewand, mit einer Verbindungsstange, die an einem Montagegestell befestigbar ist, und mit einem an einem Ende der Verbindungsstange angebrachten Befestigungsteil, das an einer Gebäudewand befestigbar ist, wobei die Verbindungsstange zumindest einen ein Außengewinde aufweisenden Längenabschnitt aufweist, wobei die Verbindungsstange mit einem mit einem Montagegestell lösbar verbindbaren, kanalförmigen Verbindungsteil versehen ist, welches eine Längsachse definiert, und in welchem die Verbindungsstange axial verschiebbar geführt ist, wobei das kanalförmige Verbindungsteil mit einem Schieber versehen ist, der auf dem Verbindungsteil axial zur Längsachse der Verbindungsstange aus einer Nicht-Kontaktstellung in eine Kontaktstellung und umgekehrt verschiebbar ist, und wobei der Schieber einen der Verbindungsstange zugewandten Kontaktabschnitt aufweist, der in der Kontaktstellung an dem Außengewinde der Verbindungsstange anliegt. Ferner betrifft die Erfindung eine Verwendung eines solchen Befestigungssets zum Befestigen eines Montagegestells für Sanitärobjekte an einer Gebäudewand.

Ein derartiges Befestigungsset ist aus der EP 2 752 526 A2 bekannt. Das bekannte Befestigungsset umfasst eine Verbindungsstange, die mittels einer Zentriervorrichtung an einem Ende mit einem Montagegestell für Sanitärapparate verbunden wird, und einem Befestigungsteil, das am anderen Ende der Verbindungsstange angebracht und an einer Gebäudewand befestig wird. Für eine Grobeinstellung der Montagetiefe bzw. des Wandabstands kann die Verbindungsstange in dem Befestigungsteil so lange frei bewegt werden, bis diese Bewegung durch ein, ein Innengewinde aufweisendes, Steckteil gesperrt wird. Eine schnelle Montage des Montagegestells ist somit gewährleistet. Allerdings ist der maximale Einstellbereich dieser Wandhalterung begrenzt und ein werkzeugfreies Lösen der Sperre nicht möglich.

Ein weiteres Befestigungsset als Wandhalterung ist aus der EP 1 260 639 B1 bekannt. Das bekannte Befestigungsset umfasst eine Verbindungsstange, die an einem Ende an einem Montagegestell für Sanitärapparate befestigt wird, und ein Befestigungsteil, das am anderen Ende der Verbindungsstange angebracht und an einer Gebäudewand befestigt wird. Die Verbindungsstange und das Befestigungsteil sind mittels eines aufgesteckten Riegels, der als U-förmige Clipmutter ausgebildet ist, lösbar miteinander verbunden. Das Befestigungsteil weist hierzu einen Schaft mit einem glatten Durchgang auf, in den das dem Montagegestell abgewandte Ende der Verbindungsstange eingesteckt wird. Der Schaft ist mit Öffnungen versehen, in welche die Clipmutter als Riegel eingesteckt und damit quer zur Längsachse der Verbindungsstange auf dieselbe aufgesteckt wird. Diese Wandhalterung ermöglicht eine schnelle Montage des Montagegestells mit einer Grobeinstellung der Montagetiefe und einer nachfolgenden Feinjustierung. Allerdings ist der maximale Einstellbereich dieser Wandhalterung begrenzt.

Die EP 1990 547 A2 zeigt ein Montageset mit einem Verbindungselement zur Montage von Leitungen, Profilen oder anderen Gegenständen an Gebäudestrukturen. Das Verbindungselement besteht aus einer Gewindestange und einem schraubenmutterartigen Gegenelement, welches aus einem ein rinnenförmiges Innengewinde aufweisenden Verbindungsteil und einem Schieber (Riegel) zusammengesetzt ist und über zwei axial beabstandete Flansche zur Aufnahme von Leitungen oder Profilen verfügt. Zur Herstellung des Eingriffs der Gewindestange in das Innengewinde des schraubenmutterartigen Gegenelements kann der Schieber entlang der Achse der Gewindestange aus einer Nicht-Kontaktstellung in eine Kontaktstellung geschoben werden. Ein dem Innengewinde zugewandtes sperrhakenförmiges Rastelement des Schiebers sichert nach der Erstmontage den Schieber in seiner Position und verhindert durch Einrasten in das Gewinde der Gewindestange ein Lösen der Verbindung.Durch den beschriebenen Mechanismus lässt sich das Verbindungselement zwar schnell Positionieren und Sichern, jedoch kann die Kontaktstellung über eine umgekehrte Verschiebung des Schiebers nur umständlich durch Aufbiegen des Rastelements gelöst werden.

Davon ausgehend liegt der Erfindung die Aufgabe zugrunde, ein Befestigungsset der eingangs genannten Art zu schaffen, das als Schnellbefestigungsset kompakte, platzsparende Abmessung aufweist und einen relativ großen Einstellbereich bietet. Gelöst wird diese Aufgabe durch ein Befestigungsset mit den im Anspruch 1 angegebenen Merkmalen. Bevorzugte und vorteilhafte Ausgestaltungen des erfindungsgemäßen Befestigungssets sind in den Unteransprüchen angegeben.

Das erfindungsgemäße Befestigungsset ist dadurch gekennzeichnet, dass der Schieber aus der Kontaktstellung in die Nicht-Kontaktstellung verschiebbar ist, und dass das kanalförmige Verbindungsteil an seiner Außenseite mindestens zwei radiale Absätze aufweist, die an entgegengesetzten Umfangsabschnitten des Verbindungsteils vorgesehen und voneinander, bezogen auf die Längsachse des kanalförmigen Verbindungsteils, axial beabstandet sind, wobei durch die radialen Absätze der Schieber aus der Nicht-Kontaktstellung in die Kontaktstellung und umgekehrt bewegbar ist und in der jeweiligen Stellung relativ zu der Verbindungsstange gehalten wird.

Das erfindungsgemäße Befestigungsset ermöglicht eine schnelle Montage des Montagegestells mit einer schnellen Grobeinstellung der Montagetiefe und einer nachfolgend bei Bedarf möglichen Feineinstellung. Das erfindungsgemäße Befestigungsset zeichnet sich bei kompakten, platzsparenden Abmessungen, insbesondere bei einer vorgegebenen Länge der Verbindungsstange, durch einen relativ großen Einstellbereich aus. Denn zur Einstellung der Montagetiefe des Montagegestells ermöglicht das erfindungsgemäße Befestigungsset auch eine Nutzung der Tiefe bzw. der horizontalen Innenweite einer vertikalen Hohlprofilstange des Montagegestells, wobei das dem Montagegestell zugewandte Ende der Verbindungsstange erforderlichenfalls unterschiedlich weit in die Hohlprofilstange eingeführt werden kann. Ferner ermöglicht das erfindungsgemäße Befestigungsset auch eine Einstellung, bei welcher die Verbindungsstange außerhalb der Hohlprofilstange in dem kanalförmigen Verbindungsteil axial festgelegt wird.

Das mit dem Montagegestell bzw. der Hohlprofilstange verbindbare kanalförmige Verbindungsteil und die Verbindungsstange sind vorzugsweise derart ausgebildet, dass im montierten Zustand des Befestigungssets das der Gebäudewand bzw. dem Befestigungsteil abgewandte Ende der Verbindungsstange über das kanalförmige Verbindungsteil hinaus in das Montagegestell bzw. in die Hohlprofilstange ragt oder ragen kann. Anders ausgedrückt, ist das der Gebäudewand bzw. dem Befestigungsteil abgewandte Ende der Verbindungsstange zur Einstellung der Montagetiefe des Montagegestells über das dem Montagegestell zugewandte Ende des kanalförmigen Verbindungsteils hinaus in eine Hohlprofilstange des Montagegestells hinein verschiebbar.

Das kanalförmige Verbindungsteil weist vorzugsweise einen hülsenförmigen Abschnitt auf, an den sich axial ein rinnenförmiger Abschnitt anschließt.

Um den Schieber zuverlässig aus der Nicht-Kontaktstellung in die Kontaktstellung und umgekehrt bewegen zu können und in der jeweiligen Stellung relativ zu der Verbindungstange zu halten, weist das kanalförmige Verbindungsteil an seiner Außenseite mindestens zwei radiale Absätze auf, die an entgegengesetzten Umfangsabschnitten des Verbindungsteils vorgesehen und voneinander axial beabstandet sind. In diesem Zusammenhang ist es des Weiteren vorteilhaft, wenn mindestens einer der Absätze, vorzugsweise der jeweilige Absatz, eine schräg zur Längsachse des kanalförmigen Verbindungsteils verlaufende Gleitkante oder Gleitfläche aufweist. Durch die Gleitkante oder Gleitfläche kann der Schieber einfacher aus der Nicht-Kontaktstellung in die Kontaktstellung und umgekehrt bewegt werden.

Nach einer weiteren bevorzugten Ausgestaltung des erfindungsgemäßen Befestigungssets ist der Schieber ring- oder hülsenförmig ausgebildet. Hierdurch kann eine spielfreie Anlage des der Verbindungsstange zugewandten Kontaktabschnitts des Schiebers an dem Außengewinde sichergestellt werden. Zudem bewirkt die Ausführung des Schiebers als ring- oder hülsenförmiger Schieber, dass der Schieber unverlierbar oder nahezu unverlierbar auf dem kanalförmigen Verbindungsteil angeordnet ist. Der Schieber muss allerdings nicht zwingend eine geschlossene Ring- oder Hülsenkontur aufweisen. Vielmehr liegt es auch im Rahmen der Erfindung, den ring- oder hülsenförmigen Schieber in Form eines einen Axialschlitz aufweisenden Klemmringes oder einer entsprechend ausgebildeten Klemmhülse auszuführen.

Eine weitere vorteilhafte Ausgestaltung des erfindungsgemäßen Befestigungssets ist dadurch gekennzeichnet, dass das kanalförmige Verbindungsteil innenseitig einen rinnenförmigen Gewindegrund aufweist. Der rinnenförmige Gewindegrund dient als Gegengewinde für das Außengewinde der Verbindungsstange. Wenn das Außengewinde der Verbindungsstange mit dem rinnenförmigen Gewindegrund in Eingriff steht, kann durch Drehen der Verbindungsstange eine Feineinstellung der Montagetiefe des Montagegestells vorgenommen werden. Der rinnenförmige Gewindegrund kann auch als Teilgewinde bezeichnet werden. Ferner können das kanalförmige, den rinnenförmigen Gewindegrund aufweisende Verbindungsteil und der Schieber zusammen auch als zweiteilige Mutter bezeichnet werden.

Für einen zuverlässigen Eingriff des Außengewindes der Verbindungsstange in den rinnenförmigen Gewindegrund des kanalförmigen Verbindungsteils ist es vorteilhaft, wenn gemäß einer weiteren Ausgestaltung der Erfindung der dem Außengewinde zugewandte Kontaktabschnitt des Schiebers als Vorsprung ausgebildet ist. Durch den vorspringenden Kontaktabschnitt des Schiebers lässt sich das Außengewinde der Verbindungsstange mit optimalem Druck gegen den rinnenförmigen Gewindegrund des kanalförmigen Verbindungsteils drücken, so dass sich ein sehr zuverlässiger Gewindeeingriff ergibt.

Eine weitere vorteilhafte Ausgestaltung des erfindungsgemäßen Befestigungssets sieht vor, dass das kanalförmige Verbindungsteil an seiner Außenseite mindestens eine Vertiefung aufweist, in die ein mit dem Schieber verbundenes Rastelement einrastbar ist. Hierdurch lässt sich der Schieber in der Kontaktstellung gegen eine unbeabsichtigte Bewegung in die Nicht-Kontaktstellung oder umgekehrt arretieren.

Hinsichtlich der kompakten, platzsparenden Ausführung des Befestigungssets ist es auch vorteilhaft, wenn gemäß einer weiteren Ausgestaltung der Erfindung das kanalförmige Verbindungsteil einen rinnenförmigen Abschnitt aufweist, dessen Längsöffnung eine Axialführung für den Schieber definiert, wobei der der Verbindungsstange zugewandte Kontaktabschnitt bzw. Vorsprung des Schiebers in der Kontaktstellung in der Längsöffnung aufgenommen ist. Der rinnenförmige Abschnitt bzw. die Längsöffnung des kanalförmigen Verbindungsteils erstreckt sich vorzugsweise über mindestens die Hälfte der Länge des Verbindungsteils.

Das an einer Gebäudewand befestigbare Befestigungsteil des erfindungsgemäßen Befestigungssets weist vorzugsweise ein Gewindeloch auf, in welches die Verbindungsstange einschraubbar ist. Dies ist in fertigungstechnischer Hinsicht vorteilhaft. Denn das Befestigungsteil und die Verbindungsstange können somit separat voneinander aus unterschiedlichen Materialien kostengünstig hergestellt werden. Das Befestigungsteil kann beispielsweise aus Kunststoff oder Metallguss hergestellt werden, während die Verbindungsstange vorzugsweise als Gewindestange aus Stahl hergestellt wird. Ferner kann die in das Gewindeloch des Befestigungsteils eingeschraubte Verbindungsstange gegen unbeabsichtigtes Herausdrehen gesichert werden, zum Beispiel durch Verklebung und/oder durch plastische Umformung eines Abschnitts des Gewindelochs, nachdem die Verbindungsstange in das Gewindeloch eingeschraubt wurde. Zudem ermöglicht das Gewindeloch des Befestigungsteils bei Bedarf eine zusätzliche Feineinstellung der Montagetiefe des Montagegestells. Des Weiteren ist das Befestigungsteil zu seiner Befestigung an einer Gebäudewandvorzugsweise mit einem Langloch zum Anbringen einer Befestigungsschraube versehen.

Eine weitere vorteilhafte Ausgestaltung des erfindungsgemäßen Befestigungssets ist dadurch gekennzeichnet, dass das kanalförmige Verbindungsteil einen dem Montagegestell zugeordneten Verbindungsabschnitt aufweist, über den das Verbindungsteil mittels eines Steckteils an einem Montagegestell axial festlegbar ist. Hierdurch wird eine schnelle und komfortable Befestigung des kanalförmigen Verbindungsteils an dem Montagegestell ermöglicht. Vorzugsweise sind das Steckteil und das Verbindungsteil voneinander separat gefertigte Teile. Besonders bevorzugt weist der Verbindungsabschnitt einen Spalt auf, in den ein Abschnitt einer Hohlprofilstangenwand einbringbar und/oder ein Abschnitt des Steckteils einschiebbar ist. Der Spalt kann dabei vorteilhaft durch zwei am kanalförmigen Verbindungsteil ausgebildete Flansche definiert sein. In diesem Zusammenhang ist es zudem vorteilhaft, wenn das Steckteil als Kappe ausgebildet ist, die in eine vertikale Hohlprofilstange des Montagegestells einsteckbar ist. Hierdurch wird eine schnelle und komfortable Axialsicherung bzw. Verriegelung des kanalförmigen Verbindungsteils an dem Montagegestell erzielt. Für diese Axialsicherung (Verriegelung) des kanalförmigen Verbindungsteils wird kein Werkzeug benötigt. Die Kappe, die auch als Verschlusskappe oder Stopfen bezeichnet werden kann, kann ohne Werkzeug in das obere Ende der Hohlprofilstange eingesteckt werden. Zudem lässt sich durch die Kappe der optische Eindruck des Montagegestells verbessern. Darüber hinaus lassen sich die schmalen Kanten der Hohlprofilstange, an denen sich Handwerker bei der Befestigung und der Verkleidung des Montagegestells eventuell verletzen können, durch die Kappe abdecken, so dass die Kappe auch einen Schutz gegen Verletzungen bietet.

Nach einer weiteren vorteilhaften Ausgestaltung des erfindungsgemäßen Befestigungssets weist das kanalförmige Verbindungsteil einen einem Montagegestell zugeordneten Verbindungsabschnitt auf, über den das Verbindungsteil formschlüssig mit dem Montagegestell verbindbar ist. Bei dieser Ausgestaltung kann das kanalförmige Verbindungsteil vorzugsweise auch ohne ein Steckteil bzw. ohne eine Kappe (Verschlusskappe) mit dem Montagegestell lösbar verbunden werden, so dass das Verbindungsteil dann aber ebenfalls an dem Montagegestell axial festgelegt ist. Beispielsweise kann der Verbindungsabschnitt des kanalförmigen Verbindungsteils mindestens einen im Wesentlichen ovalen oder nicht-kreisförmigen Flansch aufweisen, der durch eine entsprechend geformte Durchgangsöffnung des Montagegestells hindurchgeführt werden kann, wobei axial beabstandet zu dem Flansch, in Einführrichtung nachfolgend, ein weiterer Flansch oder Anschlag an dem Verbindungsteil ausgebildet ist. Nach Hindurchführen des im Wesentlichen ovalen oder nicht-kreisförmigen Flansches durch die entsprechend geformte Durchgangsöffnung des Montagegestells und durch Drehen des kanalförmigen Verbindungsteils, beispielsweise um 90°, ergibt sich in Zusammenwirkung mit dem weiteren Flansch oder Anschlag eine axiale Festlegung des kanalförmigen Verbindungsteils an dem Montagegestell. Optional kann dabei der Spalt zwischen dem im Wesentlichen ovalen oder nicht-kreisförmigen Flansch und dem weiteren Flansch oder Anschlag so ausgebildet sein, dass sich beim Drehen des kanalförmigen Verbindungsteils ein leichter Reibschluss zwischen dem Verbindungsteil und dem Montagegestell ergibt. Beispielsweise kann hierzu das Verbindungsteil innerhalb des Spaltes eine kleine Erhebung oder einen Umfangsabschnitt aufweisen, die/der beim Drehen des in das Montagegestell eingesetzten Verbindungsteils in Reibschluss mit dem Montagegestell gelangt.

Die Lehre der vorliegenden Erfindung beinhaltet insbesondere die Verwendung des erfindungsgemäßen Befestigungssets, vorzugsweise in einer der vorgenannten Ausgestaltungen, zum Befestigen eines Montagegestells für Sanitärobjekte, insbesondere für einen Spülkasten, eine WC-Schüssel und/oder ein Waschbecken, an einer Gebäudewand.

Nachfolgend wird die Erfindung anhand einer Ausführungsbeispiele darstellenden Zeichnung näher erläutert. Es zeigen:
- Fig. 1: ein erfindungsgemäßes Befestigungsset, das an einem oberen Abschnitt einer Hohlprofilstange eines Montagegestells befestigt ist und sich in einem entriegelten Zustand befindet, in einer perspektivischen Seitenansicht;
- Fig. 2: das Befestigungsset gemäß Fig. 1 in einer entsprechenden perspektivischen Seitenansicht, wobei jedoch Teile des Befestigungssets und der obere Abschnitt der Hohlprofilstange vertikal geschnitten dargestellt sind;
- Fig. 3: das Befestigungsset gemäß Fig. 1 in einer entsprechenden perspektivischen Seitenansicht, wobei sich das Befestigungsset in einem verriegelten Zustand befindet;
- Fig. 4: das Befestigungsset gemäß Fig. 3 in einer entsprechenden perspektivischen Seitenansicht, wobei jedoch Teile des Befestigungssets und der obere Abschnitt der Hohlprofilstange wiederum vertikal geschnitten dargestellt sind;
- Fig. 5 und 6: Teile des Befestigungssets in einer vergrößerten perspektivischen Seitenansicht, wobei die Teile im entriegelten bzw. verriegelten Zustand und ein kanalförmiges Verbindungsteil mit einem Schieber jeweils vertikal geschnitten gezeigt sind;
- Fig. 7: das kanalförmige Verbindungsteil mit dem Schieber, befestigt an einem oberen Abschnitt der Hohlprofilstange, die vertikal geschnitten ist, ohne Gewindestange, in einer weiteren perspektivischen Seitenansicht;
- Fig. 8: die Teile aus Fig. 7 in einer Explosionsdarstellung; und
- Fig. 9: die Teile aus den Figuren 7 und 8 horizontal geschnitten, in einer weiteren perspektivischen Ansicht.

Das in der Zeichnung dargestellte Befestigungsset 1 dient der Abstützung und Befestigung eines Montagegestells für ein oder mehrere Sanitärobjekte, zum Beispiel einen Spülkasten und eine WC-Schüssel, an einer Gebäudewand (nicht gezeigt). Von dem Montagegestell ist in der Zeichnung lediglich ein oberer Abschnitt einer vertikal auszurichtenden Hohlprofilstange 2 gezeigt. Das Montagegestell weist üblicherweise mindestens zwei vertikal auszurichtende Hohlprofilstangen 2 auf, die durch einen oder mehrere Querträger (Querstreben) miteinander verbunden sind. Die Hohlprofilstangen 2 können beispielsweise aus Vierkantrohren oder aus offenen Profilstangen, die im Querschnitt im Wesentlichen C-förmig ausgebildet sind, bestehen. Des Weiteren können die Hohlprofilstangen 2 an mindestens zwei ihrer benachbarten Längskanten ausgebildete Längsnuten 2.1, 2.2 aufweisen, die dem formschlüssigen Anklemmen eines Verbinders zum Befestigen einer oder mehrerer weiterer Hohlprofilstangen dienen.

Das Befestigungsset 1 ist aus einem an einer Gebäudewand zu befestigenden Befestigungsteil 3, einer Verbindungsstange 4, einem mit dem Montagegestell lösbar verbindbaren, kanalförmigen Verbindungsteil 5 und einem axial zur Längsachse der Verbindungsstange 4 bewegbaren Schieber 6 zusammengesetzt. Die Verbindungsstange 4 ist als Gewindestange ausgeführt. Sie besitzt zumindest über einen Längenabschnitt ein Außengewinde 4.1.

Jeweils am oberen Ende der vertikal auszurichtenden Hohlprofilstangen 2 des Montagegestells sind zwei gegenüberliegende Durchgangsöffnungen (Löcher) 2.3, 2.4 eingearbeitet, die der Befestigung des kanalförmigen Verbindungsteils 5 dienen. Das Verbindungsteil 5 weist hierzu einen Verbindungsabschnitt 5.1 auf, über den es formschlüssig mit dem Montagegestell verbindbar ist. Vorzugsweise ist der Verbindungsabschnitt 5.1 derart ausgebildet, dass über ihn das Verbindungsteil 5 mittels eines Steckteils 7 am Montagegestell axial festlegbar ist. Beispielsweise weist der Verbindungsabschnitt hierzu einen Spalt 5.2 auf, in den ein Abschnitt des Montagegestells, nämlich ein die Durchgangsöffnung 2.4 begrenzender Abschnitt der Hohlprofilstange 2 einbringbar ist. Der Spalt 5.2 ist durch zwei an dem kanalförmigen Verbindungsteil angeformte Flansche 5.3, 5.4 definiert.

Der am stirnseitigen Ende des kanalförmigen Verbindungsteils 5 angeordnete Flansch 5.3 ist vorzugsweise kreisförmig ausgebildet. Der dazu axial beabstandete Flansch 5.4 ist nicht-kreisförmig, sondern beispielsweise oval ausgebildet. Der Spalt 5.2 oder axiale Abstand zwischen den beiden Flanschen 5.3, 5.4 entspricht der Wandstärke der Hohlprofilstange 2 oder ist etwas größer als die Wandstärke der Hohlprofilstange 2.

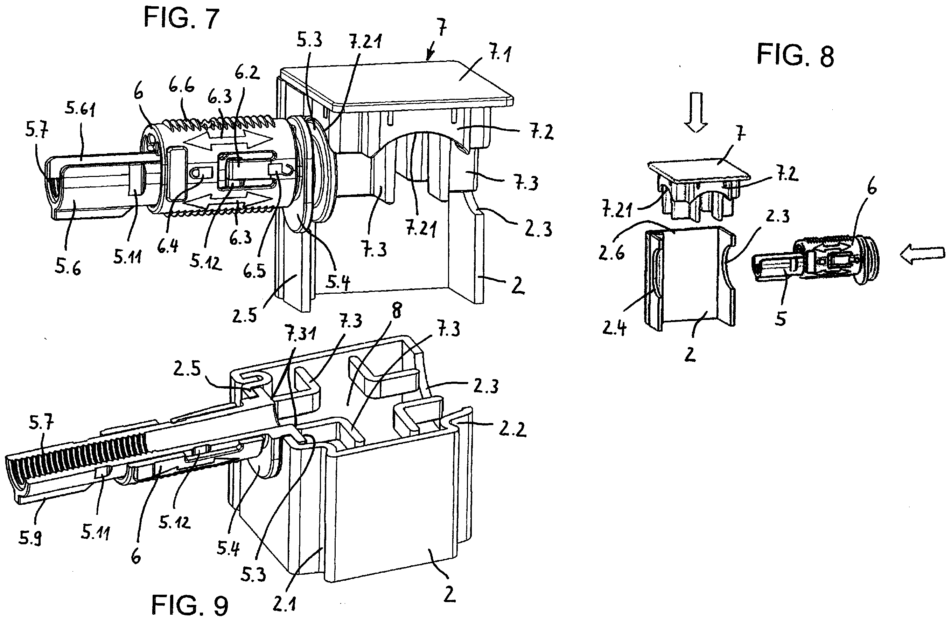

Die beiden Durchgangsöffnungen 2.3, 2.4 der Hohlprofilstange 2 sind ebenfalls unterschiedlich ausgebildet. Die Öffnung 2.3, die in der dem Raum zugewandten Hohlprofilstangenseite eingearbeitet ist, ist vorzugsweise als kreisrundes Loch ausgeführt, während die andere Öffnung 2.4, die in der der Gebäudewand zugewandten Hohlprofilstangenseite eingearbeitet ist, als ovales Loch ausgeführt ist. Der kleinste Innenweite des ovalen Lochs 2.4 ist deutlich kleiner als der Durchmesser der anderen Öffnung 2.3 und auch deutlich kleiner als der Außendurchmesser des kreisförmigen Flansches 5.3 des kanalförmigen Verbindungsteils. Die Durchgangsöffnungen 2.3, 2.4 sind so bemessen, dass das Verbindungsteil 5 über die kreisförmige Öffnung 2.3 hindurch soweit in die ovale Öffnung 2.4 eingeführt werden kann, bis der kreisförmige Flansch 5.3 an der Innenseite der die ovale Öffnung 2.4 aufweisenden Wandung 2.5 der Hohlprofilstange 2 anschlägt (vgl. Figuren 8 und 9). Der ovale Flansch 5.4 wird dabei durch das ovale Loch 2.4 hindurchgeführt und befindet sich dann an der Außenseite der Wandung 2.5.

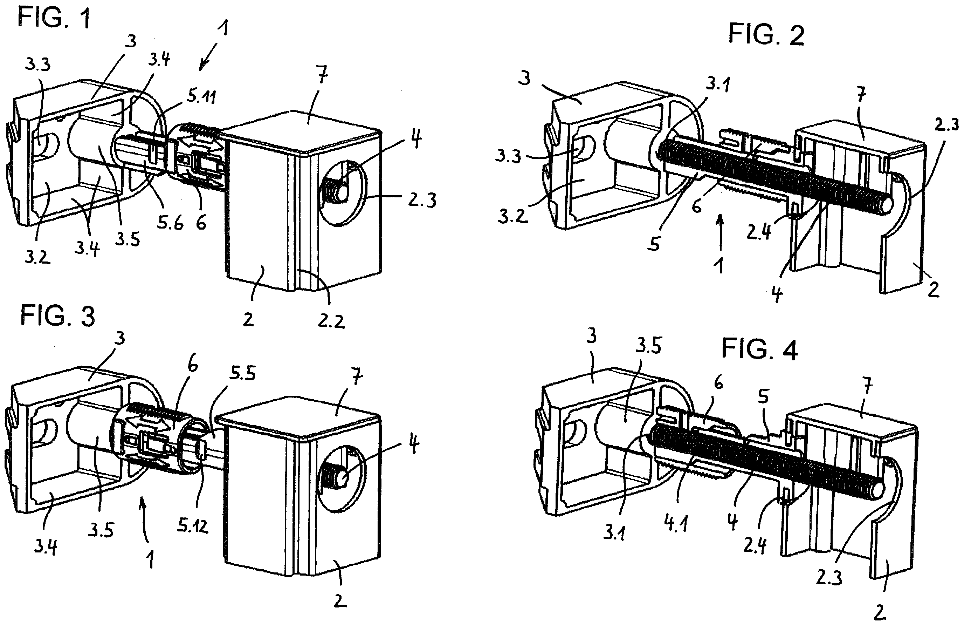

Anschließend wird das Steckteil 7 von oben in die vertikale Hohlprofilstange 2 eingesteckt, um das kanalförmige Verbindungsteil 5 am Montagegestell axial festzulegen. Das Steckteil 7 ist vorzugsweise als Stopfen oder Kappe ausgebildet, um die obere Endöffnung 2.6 der Hohlprofilstange 2 zu verschließen. Das Steckteil 7, das auch als Verschlusskappe bezeichnet werden kann, weist einen deckelartigen Abschnitt 7.1 auf, dessen Oberseite vorzugsweise im Wesentlichen eben ausgebildet ist. An der Unterseite des deckelartigen Abschnitts 7.1 sind in die Hohlprofilstange 2 einsteckbare Vorsprünge 7.2, 7.3 ausgebildet. Einer dieser Vorsprünge ist beispielsweise in Form eines umlaufenden Kragens 7.2 ausgebildet, der vier im Wesentlichen rechtwinklig zueinander angeordnete Seitenabschnitte aufweist, wobei der jeweilige Seitenabschnitt eine konkave Einbuchtung 7.21 aufweist. In eine dieser Einbuchtungen 7.21 greift teilweise der kreisförmige Flansch 5.3 des Verbindungsteils 5 ein. Die Seitenabschnitte des Kragens 7.2 verlaufen im montierten Zustand der Verschlusskappe 7 nahe oder dicht an den Innenseiten der Hohlprofilstange 2 (vgl. Figuren 2 und 4).

Die anderen Vorsprünge 7.3 der Kappe 7 sind innerhalb des Kragens 7.2 angeordnet und ragen deutlich tiefer in die Hohlprofilstange 2 als der kragenförmige Vorsprung 7.2. Die Vorsprünge 7.3 weisen jeweils im Wesentlichen ein L- oder winkelförmiges Querschnittprofil auf. Sie begrenzen einen kreuzförmigen Durchgang (vgl. Fig. 9), wobei die Verbindungsstange (Gewindestange) 4 im montierten Zustand des Befestigungssets 1 koaxial zu einer der sich kreuzenden Achsen des Durchgangs 8 verläuft. Die im montierten Zustand der Kappe 7 vertikal verlaufenden Kanten 7.31 zweier der Vorsprünge 7.3 liegen unmittelbar oder mit geringem Spiel an dem kreisförmigen Flansch 5.3 des eingesetzten Verbindungsteils an, so dass das Verbindungsteil 5.3 an dem Montagegestell bzw. der Hohlprofilstange 2 axial festgelegt ist.

Das an einer Gebäudewand anzubringende Befestigungsteil 3 weist ein Gewindeloch 3.1 auf, in welches die Gewindestange 4 einschraubbar ist. Das Befestigungsteil 3 besitzt einen plattenförmigen Abschnitt 3.2 mit einer Durchgangsöffnung 3.3 zum Anbringen einer Befestigungsschraube (nicht gezeigt), wobei der Kopf der Schraube im montierten Zustand vorzugsweise mit einer Unterlegscheibe an der Innenseite des Befestigungsteils 3 anliegt. Die Durchgangsöffnung 3.3 ist vorzugsweise als Langloch ausgebildet. Des Weiteren weist das Befestigungsteil 3 von dem plattenförmigen Abschnitt abstehende Stege 3.4 auf. Die Stege 3.4 schließen einen das Gewindeloch 3.1 zum Einschrauben der Gewindestange 4 aufweisenden Schraubdom 3.5 ein bzw. sind an den Schraubdom 3.5 angeformt. Das dem Montagegestell zugewandte Ende des Schraubdoms 3.5 sowie die dem Montagegestell zugewandten Kanten der Stege 3.4 schließen vorzugsweise im Wesentlichen flächenbündig zueinander ab.

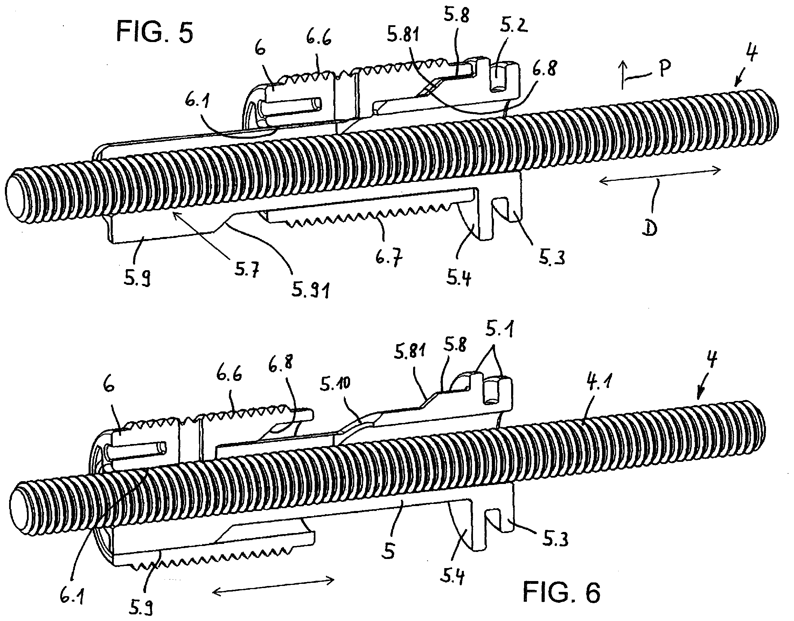

Die Verbindungsstange (Gewindestange) 4 ist in dem kanalförmigen Verbindungsteil 5 axial verschiebbar geführt. Das Verbindungsteil 5 weist einen hülsenförmigen. Abschnitt 5.5 auf, an den sich axial ein rinnenförmiger Abschnitt 5.6 anschließt. Die Flansche 5.3, 5.4 sind an dem hülsenförmigen Abschnitt 5.5 angeordnet. Das Verbindungsteil 5 hat entlang seines hülsenförmigen Abschnitts 5.5 eine ovale Innenquerschnittsfläche. Die Innenseite des hülsenförmigen Abschnitts 5.5 ist vorzugsweise glatt oder im Wesentlichen glatt ausgebildet. Die kleinste Innenweite der ovalen Innenquerschnittsfläche des hülsenförmigen Abschnitts 5.5 ist größer als der Außendurchmesser des Gewindes 4.1 der Verbindungsstange 4. Der rinnenförmige Abschnitt 5.6 des Verbindungsteils weist innenseitig einen rinnenförmigen Gewindegrund 5.7 auf (vgl. Fig. 5, 7 und 9). Der Gewindegrund 5.7 ist passend zu dem Außengewinde 4.1 der Verbindungsstange ausgebildet. Durch eine bestimmten Radialverschiebung bzw. ein Absenken des am Montagegestell axial festgelegten Verbindungsteils 5 gegenüber der am Befestigungsteil 3 befestigten Verbindungsstange 4 um ein Maß, das beispielsweise in der Größenordnung von 2 bis 4 mm liegt, können der rinnenförmige Gewindegrund 5.7 des Verbindungsteils und das Außengewinde 4.1 der Verbindungsstange außer Eingriff gebracht und das Verbindungsteil 5 sodann entlang der Verbindungsstange 4 axial verschoben werden. Die besagte Radialverschiebung und die axiale Verschiebung sind in Fig. 5 durch einen kleinen vertikalen Pfeil P bzw. einen Doppelpfeil D angedeutet.

Auf dem kanalförmigen Verbindungsteil 5 sitzt der Schieber 6. Er ist axial zur Längsachse des Verbindungsteils 5 aus einer Nicht-Kontaktstellung in eine Kontaktstellung und umgekehrt verschiebbar und weist einen der Verbindungsstange 4 zugewandten Kontaktabschnitt 6.1 auf, der in der Kontaktstellung am Außengewinde 4.1 der Verbindungsstange 4 anliegt. Der Kontaktabschnitt 6.1 des Schiebers ist als Vorsprung ausgebildet, welcher der Verbindungsstange 4 zugewandt ist. Die Längsöffnung 5.61 des rinnenförmigen Abschnitts 5.6 des Verbindungsteils definiert eine Axialführung für den Schieber 6, wobei der der Verbindungsstange 4 zugewandte Kontaktabschnitt 6.1 des Schiebers 6 in der Verriegelungsstellung in der Längsöffnung 5.61 aufgenommen ist.

In den Figuren 2 und 4 bis 6 ist gut zu erkennen, dass das kanalförmige Verbindungsteil 5 an seiner Außenseite zwei radiale Absätze 5.8, 5.9 aufweist, die an entgegengesetzten Umfangsabschnitten des Verbindungsteils 5 angeordnet und axial voneinander beabstandet sind. Beide Absätze 5.8, 5.9 haben jeweils eine schräg zur Längsachse des Verbindungsteils 5 verlaufende Gleitkante oder Gleitfläche 5.81, 5.91. Die beiden Gleitkanten bzw. Gleitflächen 5.81, 5.91 sind an einander zugewandten Enden der beiden Absätze 5.8, 5.9 ausgebildet. Zudem ist am Übergang zwischen dem rinnenförmigen Abschnitt 5.6 und dem hülsenförmigen Abschnitt 5.5, und zwar am Rand der Längsöffnung 5.61 eine schräg zur Längsachse des Verbindungsteils 5 verlaufende Gleitkante oder Gleitfläche 5.10 ausgebildet.

Der Schieber 6 weist innenseitig eine den Gleitkanten oder Gleitflächen 5.81, 5.10 zugeordnete Gleitkante oder Gleitfläche 6.8 auf, die ebenfalls schräg zur Längsachse des Schiebers 6 bzw. des Verbindungsteils 5 verläuft.

Des Weiteren besitzt das kanalförmige Verbindungsteil 5 an seiner Außenseite axial voneinander beabstandete Vertiefungen 5.11, 5.12, denen ein mit dem Schieber 6 verbundenes Rastelement 6.2 zugeordnet ist Das Rastelement 6.2 ist beispielsweise in Form einer federelastischen Rastlasche ausgebildet. Es rastet in zwei verschiedenen Positionen des Schiebers 6 relativ zu dem Verbindungsteil 5 in eine der beiden Vertiefungen 5.11, 5.12 ein. Die Vertiefungen 5.11, 5.12 sind einerseits einem Entriegelungszustand und andererseits einem Verriegelungszustand zugeordnet. Die möglichen Bewegungsrichtungen des Schiebers 6 sind durch eingeprägte oder aufgedruckte Doppelpfeile 6.3 markiert. Zudem ist der Schieber 6 mit zwei Symbolen 6.4, 6.5 versehen, welche ein geschlossenes und ein geöffnetes Bügelschloss symbolisieren und in Kombination mit den Doppelpfeilen 6.3 die Verschieberichtung zur Einstellung des Entriegelungszustandes bzw. des Verriegelungszustandes anzeigen. Darüber hinaus weist der Schieber 6 auf seiner Außenfläche zwei entgegengesetzt angeordnete Rippenflächen 6.6, 6.7 auf, die als rutschhemmende Griffflächen die manuelle, werkzeuglose Verschiebung des Schiebers 6 erleichtern.

In der Verriegelungsstellung bildet der Schieber 6 zusammen mit dem kanalförmigen Verbindungsteil 5 eine (zweiteilige) Mutter. In dieser Stellung kann der Schieber 6 zusammen mit dem Verbindungsteil 5 um die Längsachse der Verbindungsstange 4 gedreht werden und damit eine Feineinstellung der Montagetiefe des Montagegestells vorgenommen werden. Für eine schnelle Grobeinstellung der Montagetiefe des Montagegestells wird der Schieber 6 in die Entriegelungsstellung geschoben und dabei der Eingriff des Gewindegrundes (Teilgewindes) 5.7 des Verbindungsteils 5 in das Außengewinde 4.1 der Verbindungsstange 4 durch eine Radialbewegung des Verbindungsteils 5 gelöst. Sodann können die Verbindungsstange 4 und das kanalförmige Verbindungsteil 5 relativ zueinander axial verschoben und damit die Montagetiefe des Montagegestells schnell, jedoch grob, eingestellt werden. Danach werden der Gewindegrund 5.7 des Verbindungsteils und das Außengewinde 4.1 der Verbindungsstange durch eine umgekehrte Radialbewegung des Verbindungsteils 5 wieder in Eingriff gebracht und durch Verschiebung des Schiebers 6 in die Verriegelungsstellung verriegelt. Bei Bedarf kann dann durch Drehen des Schiebers 6 zusammen mit dem damit verriegelten Verbindungsteil 5 um die Längsachse der Verbindungsstange 4 eine Feineinstellung der Montagetiefe vorgenommen werden.

Die Ausführung der Erfindung ist nicht auf die in der Zeichnung dargestellten Ausführungsbeispiele beschränkt. Vielmehr sind verschiedene Modifikationen möglich, die auch bei einer von den gezeigten Beispielen abweichenden Gestaltung von der in den Ansprüchen angegebenen Erfindung Gebrauch machen. So kann beispielsweise der Flansch 5.4 des Verbindungsteils 5 auch weggelassen werden.

## Patentansprüche

1. Befestigungsset (1) zum Befestigen eines Montagegestells für Sanitärobjekte, insbesondere für einen Spülkasten, eine WC-Schüssel und/oder ein Waschbecken, an einer Gebäudewand,
mit einer Verbindungsstange (4), die an einem Montagegestell befestigbar ist, und
mit einem an einem Ende der Verbindungsstange (4) angebrachten Befestigungsteil (3), das an einer Gebäudewand befestigbar ist,
wobei die Verbindungsstange (4) zumindest einen ein Außengewinde (4.1) aufweisenden Längenabschnitt aufweist,
wobei die Verbindungsstange (4) mit einem mit einem Montagegestell lösbar verbindbaren, kanalförmigen Verbindungsteil (5) versehen ist, welches eine Längsachse definiert, und in welchem die Verbindungsstange (4) axial verschiebbar geführt ist,
wobei das kanalförmige Verbindungsteil (5) mit einem Schieber (6) versehen ist, der auf dem Verbindungsteil (5) axial zur Längsachse der Verbindungsstange (4) aus einer Nicht-Kontaktstellung in eine Kontaktstellung verschiebbar ist, und
wobei der Schieber (6) einen der Verbindungsstange (4) zugewandten Kontaktabschnitt (6.1) aufweist, der in der Kontaktstellung an dem Außengewinde (4.1) der Verbindungsstange (4) anliegt,
wobei der Schieber (6) aus der Kontaktstellung in die Nicht-Kontaktstellung verschiebbar ist, **dadurch gekennzeichnet, dass** das kanalförmige Verbindungsteil (5) an seiner Außenseite mindestens zwei radiale Absätze (5.8, 5.9) aufweist, die an entgegengesetzten Umfangsabschnitten des Verbindungsteils (5) vorgesehen und voneinander, bezogen auf die Längsachse des kanalförmigen Verbindungsteils, axial beabstandet sind, wobei durch die radialen Absätze (5.8, 5.9) der Schieber (6) aus der Nicht-Kontaktstellung in die Kontaktstellung und umgekehrt bewegbar ist und in der jeweiligen Stellung relativ zu der Verbindungsstange (4) gehalten wird.

2. Befestigungsset (1) nach Anspruch 1, **dadurch gekennzeichnet, dass** mindestens einer der Absätze (5.8, 5.9) eine schräg zur Längsachse des Verbindungsteils (5) verlaufende Gleitkante oder Gleitfläche (5.81, 5.91) aufweist.

3. Befestigungsset (1) nach Anspruch 1 oder 2, **dadurch gekennzeichnet, dass** der Schieber (6) ring- oder hülsenförmig ausgebildet ist.

4. Befestigungsset (1) nach einem der Ansprüche 1 bis 3, **dadurch gekennzeichnet, dass** das kanalförmige Verbindungsteil (5) innenseitig einen rinnenförmigen Gewindegrund (5.7) aufweist.

5. Befestigungsset (1) nach einem der Ansprüche 1 bis 4, **dadurch gekennzeichnet, dass** der Kontaktabschnitt (6.1) des Schiebers (6) als Vorsprung ausgebildet ist, welcher der Verbindungsstange (4) zugewandt ist.

6. Befestigungsset (1) nach einem der Ansprüche 1 bis 5, **dadurch gekennzeichnet, dass** das kanalförmige Verbindungsteil (5) an seiner Außenseite mindestens eine Vertiefung (5.11, 5.12) aufweist, in die ein mit dem Schieber (6) verbundenes Rastelement (6.2) einrastbar ist.

7. Befestigungsset (1) nach einem der Ansprüche 1 bis 6, **dadurch gekennzeichnet, dass** das kanalförmige Verbindungsteil (5) einen rinnenförmigen Abschnitt (5.6) aufweist, dessen Längsöffnung (5.61) eine Axialführung für den Schieber (6) definiert, wobei der der Verbindungsstange (4) zugewandte Kontaktabschnitt (6.1) des Schiebers (6) in der Kontaktstellung in der Längsöffnung (5.61) aufgenommen ist.

8. Befestigungsset (1) nach einem der Ansprüche 1 bis 7, **dadurch gekennzeichnet, dass** das Befestigungsteil (3) ein Gewindeloch (3.1) aufweist, in welches die Verbindungsstange (4) einschraubbar ist.

9. Befestigungsset (1) nach einem der Ansprüche 1 bis 8, **dadurch gekennzeichnet, dass** das Set ein Montagegestell aufweist, und dass das kanalförmige Verbindungsteil (5) einen dem Montagegestell zugeordneten Verbindungsabschnitt (5.1) aufweist, über den das Verbindungsteil (5) formschlüssig mit dem Montagegestell verbindbar ist.

10. Befestigungsset (1) nach einem der Ansprüche 1 bis 8 **dadurch gekennzeichnet, dass** das Set ein Montagegestell aufweist, und dass das kanalförmige Verbindungsteil (5) einen dem Montagegestell zugeordneten Verbindungsabschnitt (5.1) aufweist, über den das Verbindungsteil (5) mittels eines Steckteils (7) an dem Montagegestell axial festlegbar ist.

11. Befestigungsset (1) nach Anspruch 10, **dadurch gekennzeichnet, dass** der Verbindungsabschnitt (5.1) einen Spalt (5.2) aufweist, in den ein Abschnitt einer Hohlprofilstangenwand (2.5) des Montagegestells einbringbar und/oder ein Abschnitt des Steckteils (7) einschiebbar ist.

12. Befestigüngsset (1) nach Anspruch 11, **dadurch gekennzeichnet, dass** der Spalt (5.2) durch zwei am kanalförmigen Verbindungsteil (5) ausgebildete Flansche (5.3, 5.4) definiert ist.

13. Befestigungsset (1) nach einem der Ansprüche 10 bis 12, **dadurch gekennzeichnet, dass** das Steckteil (7) als Kappe ausgebildet ist, die in eine vertikale Hohlprofilstange (2) des Montagegestells einsteckbar ist.

14. Verwendung eines Befestigungssets (1) nach einem der Ansprüche 1 bis 13 zum Befestigen eines Montagegestells für ein oder mehrere Sanitärobjekte, insbesondere für einen Spülkasten, eine WC-Schüssel und/oder ein Waschbecken, an einer Gebäudewand.

## Claims

1. Fastening set (1) for fastening a mounting frame for sanitary objects, in particular for a cistern, a toilet bowl and/or a washbasin, to a building wall,
with a connecting rod (4), which can be attached to a mounting frame, and
with a fastening part (3) attached to one end of the connecting rod (4), which fastening part can be fastened to a building wall,
wherein the connecting rod (4) has at least one longitudinal section having an external thread (4.1),
wherein the connecting rod (4) is provided with a channel-shaped connecting part (5) which can be detachably connected to a mounting frame, which connecting part defines a longitudinal axis, and in which the connecting rod (4) is guided in an axially displaceable manner,
wherein the channel-shaped connecting part (5) is provided with a slide (6) which is displaceable on the connecting part (5) axially to the longitudinal axis of the connecting rod (4) from a non-contact position to a contact position, and wherein the slide (6) has a contact section (6.1) facing the connecting rod (4), which contact section in the contact position abuts the external thread (4.1) of the connecting rod (4), wherein
the slide (6) is displaceable from the contact position to the non-contact position, **characterized in that** the channel-shaped connecting part (5) has at least two radial shoulders (5.8, 5.9), which are provided on opposite circumferential sections of the connecting part (5) and are axially spaced apart from one another in relation to the longitudinal axis of the channel-shaped connecting part, wherein the slide (6) can be moved from the non-contact position into the contact position and vice versa by means of the radial shoulders (5.8, 5.9) and is held in the respective position relative to the connecting rod (4).

2. Fastening set (1) according to claim 1, **characterized in that** at least one of the shoulders (5.8, 5.9) has a sliding edge or sliding surface (5.81, 5.91) extending obliquely to the longitudinal axis of the connecting part (5).

3. Fastening set (1) according to claim 1 or 2, **characterized in that** the slide (6) is ring-shaped or sleeve-shaped.

4. Fastening set (1) according to any one of claims 1 to 3, **characterized in that** the channel-shaped connecting part (5) has a channel-shaped thread base (5.7) on the inside.

5. Fastening set (1) according to any one of claims 1 to 4, **characterized in that** the contact section (6.1) of the slide (6) is designed as a projection facing the connecting rod (4).

6. Fastening set (1) according to any one of claims 1 to 5, **characterized in that** the channel-shaped connecting part (5) has at least one recess (5.11, 5.12) on its outside, into which a snap-in locking element (6.2) connected to the slide (6) can be locked.

7. Fastening set (1) according to any one of claims 1 to 6, **characterized in that** the channel-shaped connecting part (5) has a channel-shaped section (5.6), the longitudinal opening (5.61) of which defines an axial guide for the slide (6), the contact section (6.1) of the slide (6) facing the connecting rod (4) being received in the longitudinal opening (5.61) in the contact position.

8. Fastening set (1) according to any one of claims 1 to 7, **characterized in that** the fastening part (3) has a threaded hole (3.1) into which the connecting rod (4) can be screwed.

9. Fastening set (1) according to any one of claims 1 to 8, **characterized in that** the set comprises a mounting frame, and **in that** the channel-shaped connecting part (5) has a connecting section (5.1) which is assigned to the mounting frame, via which connecting section the connecting part (5) can be connected to the mounting frame in a form-fitting manner.

10. Fastening set (1) according to any one of claims 1 to 8, **characterized in that** the set comprises a mounting frame, and **in that** the channel-shaped connecting part (5) has a connecting section (5.1) which is assigned to the mounting frame and by means of which the connecting part (5) can be fixed axially to the mounting frame by means of a plug-in part (7).

11. Fastening set (1) according to claim 10, **characterized in that** the connecting section (5.1) has a gap (5.2) into which a section of a hollow profile rod wall (2.5) of a mounting frame can be introduced and/or a section of the plug-in part (7) can be inserted.

12. Fastening set (1) according to claim 11, **characterized in that** the gap (5.2) is defined by two flanges (5.3, 5.4) formed on the channel-shaped connecting part (5).

13. Fastening set (1) according to any one of claims 10 to 12, **characterized in that** the plug-in part (7) is designed as a cap which can be inserted into a vertical hollow profile rod (2) of the mounting frame.

14. Use of a fastening set (1) according to any one of claims 1 to 13 for fastening a mounting frame for one or more sanitary objects, in particular for a cistern, a toilet bowl and/or a washbasin, to a building wall.

## Revendications

1. Ensemble de fixation (1) destiné à la fixation d'un châssis de montage pour objets sanitaires, notamment pour un réservoir de chasse d'eau, une cuvette de WC et/ou un lavabo, sur un mur de bâtiment,
• avec une tige de raccordement (4), laquelle est susceptible d'être fixée sur un châssis de montage, et
• avec un élément de fixation (3) monté au niveau d'une extrémité de la tige de raccordement (4), lequel est susceptible d'être fixé sur un mur de bâtiment,
• la tige de raccordement (4) présentant au moins une section longitudinale comportant un filetage extérieur (4.1),
• la tige de raccordement (4) étant pourvue d'un élément de raccordement en forme de canal (5) susceptible d'être relié de manière amovible au châssis de montage, lequel élément de raccordement définit un axe longitudinal, et dans lequel la tige de raccordement (4) est guidée en coulissement axial,
• l'élément de raccordement en forme de canal (5) étant pourvu d'un coulisseau (6), lequel est susceptible d'être déplacé sur l'élément de raccordement (5), axialement par rapport à l'axe longitudinal de la tige de raccordement (4), d'une position de non contact dans une position de contact, et
• le coulisseau (6) présentant une section de contact (6.1) tournée vers la tige de raccordement (4), laquelle, dans la position de contact, est en appui contre le filetage extérieur (4.1) de la tige de raccordement (4),
• le coulisseau (6) étant susceptible d'être déplacé de la position de contact dans la position de non contact, **caractérisé en ce que** l'élément de raccordement en forme de canal (5) présente, sur son côté extérieur, au moins deux épaulements radiale (5.8, 5.9), lesquels sont prévus sur des sections périphériques opposées de l'élément de raccordement (5) et étant espacés axialement l'un de l'autre, par rapport à l'axe longitudinal de l'élément de raccordement en forme de canal, le coulisseau (6) étant susceptible d'être bougé de la position de non contact dans la position de contact et inversement par l'intermédiaire l'épaulements radiale (5.8, 5.9) et étant maintenu dans la position respective par rapport à la tige de raccordement (4).

2. Ensemble de fixation (1) selon la revendication 1, **caractérisé en ce qu'**au moins un d'épaulements (5.8, 5.9) présente une arête de glissement ou une surface de glissement (5.81, 5.91) passant obliquement par rapport l'axe longitudinal de l'élément de raccordement (5).

3. Ensemble de fixation (1) selon la revendication 1 ou 2, **caractérisé en ce que** le coulisseau (6) est conçu en forme de douille ou d'anneau.

4. Ensemble de fixation (1) selon l'une des revendications 1 à 3, **caractérisé en ce que** l'élément de raccordement en forme de canal (5) présente, côté intérieur, un fond de filetage (5.7) en forme de rigole.

5. Ensemble de fixation (1) selon l'une des revendications 1 à 4, **caractérisé en ce que** la section de contact (6.1) du coulisseau (6) est conçue en tant que saillie, laquelle est tournée vers la tige de raccordement (4).

6. Ensemble de fixation (1) selon l'une des revendications 1 à 5, **caractérisé en ce que** l'élément de raccordement en forme de canal (5) présente, sur son côté extérieur, au moins une cavité (5.11, 5.12), dans laquelle un élément d'encliquetage (6.2) relié au coulisseau (6) est susceptible d'être encliqueté.

7. Ensemble de fixation (1) selon l'une des revendications 1 à 6, **caractérisé en ce que** l'élément de raccordement en forme de canal (5) présente une section en forme de rigole (5.6), dont l'ouverture longitudinale (5.61) définit un guidage axial pour le coulisseau (6), la section de contact (6.1) du coulisseau (6) tournée vers la tige de raccordement (4) étant logée dans la position de contact de l'ouverture longitudinale (5.61).

8. Ensemble de fixation (1) selon l'une des revendications 1 à 7, **caractérisé en ce que** l'élément de fixation (3) présente un trou taraudé (3.1), dans lequel la tige de raccordement (4) est susceptible d'être vissée.

9. Ensemble de fixation (1) selon l'une des revendications 1 à 8, **caractérisé en ce que** l'ensemble présente un châssis de montage, et **en ce que** l'élément de raccordement en forme de canal (5) présente une section de raccordement (5.1) associée au châssis de montage, à l'aide de laquelle l'élément de raccordement (5) est susceptible d'être relié, par liaison de forme, au châssis de montage.

10. Ensemble de fixation (1) selon l'une des revendications 1 à 8, **caractérisé en ce que** l'ensemble présente un châssis de montage, et **en ce que** l'élément de raccordement en forme de canal (5) présente une section de raccordement (5.1) associée au châssis de montage, à l'aide de laquelle l'élément de raccordement (5) est susceptible d'être fixé axialement au châssis de montage au moyen d'une pièce de connexion (7).

11. Ensemble de fixation (1) selon la revendication 10, **caractérisé en ce que** la section de raccordement (5.1) présente une fente (5.2), dans laquelle une section d'une paroi de barre à profil creux (2.5) du châssis de montage est susceptible d'être introduite et/ou une section de la pièce de connexion (7) est susceptible d'être insérée.

12. Ensemble de fixation (1) selon la revendication 11, **caractérisé en ce que** la fente (5.2) est définie par deux brides (5.3, 5.4) conçues sur l'élément de raccordement en forme de canal (5).

13. Ensemble de fixation (1) selon l'une des revendications 10 à 12, **caractérisé en ce que** la pièce de connexion (7) est conçue en tant que capuchon, lequel est susceptible d'être enfiché dans une barre à profil creux verticale (2) du châssis de montage.

14. Utilisation d'un ensemble de fixation (1) selon l'une des revendications 1 à 13 destiné à la fixation d'un ensemble de montage pour un ou plusieurs objets sanitaires, notamment pour un réservoir de chasse d'eau, une cuvette de WC et/ou un lavabo, sur un mur de bâtiment.
